# EUROPÄISCHE PATENTSCHRIFT

(11) **EP 2 548 671 B1**
(45) Veröffentlichungstag und Bekanntmachung des Hinweises auf die Patenterteilung: **11.02.2015**
(21) Anmeldenummer: 12177018.4
(22) Anmeldetag: 19.07.2012
(51) Int. Cl.: B21D 37/16, B21D 53/88, B21D 26/033, B62D 25/04

(54) **Verfahren zur Herstellung eines rohrförmigen Strukturbauteils für ein Kraftfahrzeug**
Method for producing a tubular structural component for a motor vehicle
Procédé destiné à la fabrication d'un composant structurel tubulaire pour un véhicule automobile

(30) Priorität: 20.07.2011 DE 102011051965
(43) Veröffentlichungstag der Anmeldung: 23.01.2013
(73) Patentinhaber: Benteler Automobiltechnik GmbH, 33102 Paderborn (DE)
(72) Erfinder: Diersmann, Holger, 49492 Westerkappeln (DE); Knaup, Hans-Jürgen, 33175 Bad Lippspringe (DE); Gomez, Rafael Garcia, 33104 Paderborn (DE)
(74) Vertreter: Ksoll, Peter

(56) Entgegenhaltungen:
- EP-A1- 1 342 515
- WO-A1-98/24569
- WO-A1-2005/021180
- WO-A1-2005/051562
- DE-C1- 10 141 503
- US-A- 5 070 717

## Beschreibung

Die Erfindung betrifft einerseits ein Verfahren zur Herstellung eines rohrförmigen Strukturbauteils für ein Kraftfahrzeug gemäß Patentanspruch 1.

In der EP 1 172 281 A1 wird ein Verfahren zur Herstellung einer A-Säule für einen Personenkraftwagen beschrieben, bei welchem zunächst von einem stählernen Coilmaterial eine Platine abgeteilt und die Platine anschließend in mehreren Stufen unter Ausbildung eines zweischenkligen Längsflansches um ihre Längsachse zu einer in ihrer Längserstreckung bogenförmigen Basisstruktur gekrümmt wird. Danach wird die Basisstruktur mit hydraulischem Innenhochdruck in die Endform gebracht. Nunmehr werden die Schenkel des Längsflansches in paralleler Ausrichtung gefügt und letztlich über die Basisstruktur mit einer Beplankung verbunden.

In Längsrichtung stärker gekrümmte Basisstrukturteile dürften mit dem vorstehend beschriebenen Verfahren nicht herstellbar sein.

Auch in der DE 24 524 86 A1, in der DE 10 2005 028 010 B3 sowie in der DE 26 03 618 A1 werden Verfahren zur Warmumformung und Presshärtung von Metallblechen beschrieben.

Ferner sind aus der WO 98/24569 A1, der EP 1 342 515 A1, der DE 101 41 503 C1 sowie der WO 2005/021180 A1 verschiedene Herstellungsverfahren für metallische Bauteile bekannt, bei denen rohrförmige Körper mittels Innenhochdruckumformung bearbeitet werden.

Ausgehend vom Stand der Technik liegt der Erfindung die Aufgabe zu Grunde, ein Verfahren zur Herstellung eines rohrförmigen Strukturbauteils für ein Kraftfahrzeug sowie ein Strukturbauteil zu schaffen, bei welchen eine Querschnittsreduzierung des Strukturbauteils ermöglicht wird und dennoch eine Erhöhung seiner Steifigkeit erreicht werden kann.

Was den verfahrensmäßigen Teil dieser Aufgabe anlangt, so wird dieser mit den in den Ansprüchen 1 angegebenen Merkmalen gelöst.

Vorteilhafte Weiterbildungen des Verfahrens bilden Gegenstand der Ansprüche 2 bis 9.

Entsprechend den verschiedenen Verfahrensvarianten ist es jetzt in vorteilhafter Weise möglich, A- und B-Säulen einer Kraftfahrzeugkarosserie so herstellen zu können, dass bei einer relevanten Querschnittsoptimierung sowohl Sichtwinkelverbesserungen als auch höhere Steifigkeiten bei geringem Gewicht und hohen Energieaufnahmen erzielt werden. Ferner können mit den erfindungsgemäßen Verfahrensvarianten Schweller, Dachrahmen, Querträger, Stirnwände sowie Längsträger für Kraftfahrzeuge hergestellt werden.

Hierbei kann gemäß einer vorteilhaften Variante des Verfahrens eine zugeschnittene metallische Platine zunächst U-förmig vorgeformt und anschließend rohrförmig weiterverformt werden. Die seitlichen Längsbereiche des Rohrkörpers können flanschförmig aufeinander liegend positioniert und im abschließenden Endformprozess beim Innenhochdruckumformen dicht zusammengedrückt werden. Es ist aber auch ein linienförmiger Kontakt der Längsbereiche denkbar. Eine Vergütung zum Zwecke der Härtung wird durch Erwärmung eines vorgeformten Halbzeugs mit abschließendem Abschrecken in dem Formwerkzeug vorgenommen.

Nach dem U-förmigen Umformen oder Tiefziehen einer zugeschnittenen Platine kann ein Beschnitt der Längskanten der Längsbereiche erfolgen, wenn dies zum Beispiel beim Tiefziehen geometriebedingt notwendig ist.

Danach erfolgt wenigstens ein einstufiges rohrförmiges Biegen der Endabschnitte des U-förmigen Halbzeugs. Vorteilhaft kann dies mit einem Gegenanschlag im Innern in Form mindestens eines Dorns geschehen. Besonders vorteilhaft ist zur Erreichung kleiner Krümmungen in Längsrichtung des Rohrkörpers die Verwendung von segmentierten beziehungsweise gegliedert zusammenhängenden Dornen, zum Beispiel Einsteckdornen, oder zwei separaten, von beiden Endabschnitten des Rohrkörpers aus einbringbaren Dornen. Dabei kann zumindest ein Dornsegment, welches den Bereich der größten Bauteilkrümmung abstützen soll, dazu korrespondierend ausgestaltet sein.

Im Rahmen der Erfindung wird bei dem Verfahren zur Herstellung eines rohrförmigen Strukturbauteils für ein Kraftfahrzeug zunächst eine metallische Platine umfangseitig beschnitten und dann in mindestens einem Umformschritt zu einem Rohrkörper mit einander gegenüberliegenden randseitigen Kontaktbereichen geformt, worauf der Rohrkörper mittels Innenhochdruck bei dicht aneinander liegenden Kontaktbereichen zum Strukturbauteil endgeformt wird. Hierunter ist im Rahmen der Erfindung zu verstehen, dass dicht aneinander liegende Kontaktbereiche derart fluiddicht aneinander anliegen, dass der Innenhochdruckprozess durchführbar ist. Gleiches gilt für nachfolgend beschriebene bevorzugte Ausführungsvarianten.

Als Material gelangen hochfeste borlegierte Stähle, zum Beispiel AISi- oder zinkbeschichtete Warmformstähle, oder BTR 165 zur Anwendung. Die Zusammensetzung und Charakteristik von BTR 165 ist in der DE 103 48 086 A1 beschrieben.

Was die Erwärmung im Laufe der Verfahrensschritte betrifft, so ermöglicht die Erwärmung vor einem Umformschritt eine geringere Pressenkraft oder höhere Umformgrade. Durch eine Bauteiltemperatur von größer (>) AC3 direkt vor dem Abschrecken kann ein vollständig gehärtetes Bauteil hergestellt werden. Die größeren Umformgrade, insbesondere die kleineren Biegeradien, sind insbesondere gegenüber der ausschließlichen Anwendung der Innenhochdruckumformung signifikant.

Eine Erwärmung auf größer (>) AC3 gemäß dem Eisen-Kohlenstoff-Diagramm kann erfolgen, wenn vor dem Innenhochdruckumformen gehärtet werden soll oder nur eine abschließende Vergütung vorgenommen wird. Wenn eine spätere Vergütung erfolgen soll, kann eine Erwärmung vor dem U- oder rohrförmigen Umformen auch auf kleiner AC3 erfolgen. Wie beschrieben, wird das Erwärmen oder Warmhalten direkt vor dem Innenhochdruckumformen, in einem Innenhochdruckwerkzeug oder auch in einer nachgelagerten stationären Heizeinrichtung durchgeführt.

Das Abkühlen in dem Innenhochdruckwerkzeug kann durch Besprühen, Anblasen oder Tauchen erfolgen. Dies insbesondere bei einem gekühlten Formwerkzeug während des Innenhochdruckumformens.

Wichtig erscheint es noch im Rahmen der Erfindung, dass beim Zuhalten des Rohrkörpers während der Innenhochdruckumformung vorzugsweise so gearbeitet werden kann, dass den Längsschlitz des Rohrkörpers begrenzende linienförmige Kontaktbereiche aneinander gepresst werden, um folglich mit entsprechend hoher Flächenpressung dem Innenhochdruck standhalten zu können.

Des Weiteren ist es im Rahmen des erfindungsgemäßen Verfahrens von Vorteil, dass bei der Innenhochdruckumformung das Strukturbauteil durch Kontakt mit einem Kühlmittel im Formraum des Innenhochdruckwerkzeugs gehärtet wird. Dazu wird beispielsweise das Kühlmittel durch Zuflusskanäle in den Formraum geleitet. Wesentlich hierbei ist, dass der Aggregatzustand des Kühlmittels einstellbar ist, wobei das Kühlmittel insbesondere mit einem Druck von bis zu 25 MPa in den Formraum eingebracht, insbesondere eingespritzt, wird. Somit kann erreicht werden, dass durch das Kühlmittel ein ausreichend großer Wärmeabtrag vom Strukturbauteil erfolgt.

Eine weitere Variante hierbei ist die Verwendung eines Kühlmittels, dessen Druck oberhalb seines Dampfdrucks liegt.

Die Endabschnitte des Strukturbauteils können bevorzugt mit einem zumindest annähernd runden Querschnitt versehen werden. Dies kann über die bereits erwähnten Dorne erfolgen.

In der bevorzugten Anwendung zur Herstellung einer A-Säule für einen Personenkraftwagen ist es von besonderem Vorteil, wenn die umfangsseitig beschnittene Platine zunächst einen U-förmigen Querschnitt mit konvex und konkav gekrümmten Umfangsbereichen sowie längsseitigen Flanschen erhält, dass anschließend der U-förmige Querschnitt unter flächigen Kontakt der Flansche zu einem in Längsrichtung gekrümmten Rohrkörper mit einem auf der Innenseite der Krümmung liegenden seitlichen Steg umgeformt wird. Hierbei erhalten die Endabschnitte des Rohrkörpers vorzugsweise einen annähernd kreisrunden Querschnitt unterschiedlicher Größe.

Bevorzugt erhält der Endabschnitt mit dem kleineren Querschnitt einen in Längsrichtung des Rohrkörpers kleineren Krümmungsradius als der restliche Längenbereich des Rohrkörpers.

Das Strukturbauteil in Form einer A-Säule für einen Personenkraftwagen umfasst einen in Längsrichtung gekrümmten Rohrkörper, der auf der Innenseite der Krümmung mit einem quer abstehenden Steg aus aneinander liegenden Flanschen versehen ist, wobei ein Endabschnitt des Rohrkörpers stärker als der restliche Längenbereich gekrümmt ist. Beide Endabschnitte sind in einem Aspekt der Erfindung mit einem zumindest annähernd runden Querschnitt versehen und der Längenbereich zwischen den Endabschnitten weist einen mehrfach konvex und konkav gekrümmten Querschnitt auf. In einer einfachen Variante erstrecken sich die konvex und/oder konkav gekrümmten Querschnitte über die gesamte Bauteillänge.

Hierbei kann der in Längsrichtung stärker gekrümmte Endabschnitt des Rohrkörpers mit einem kleineren Querschnitt als der andere Endabschnitt versehen sein. Weiterhin kann es von Vorteil sein, dass der stärker gekrümmte Endabschnitt einen Krümmungsradius zwischen 200 mm und 400 mm, bevorzugt 300 mm, aufweist.

Der Krümmungsradius des sich an den Endabschnitt mit dem stärkeren Krümmungsradius anschließenden Längenbereichs kann zwischen 1500 mm und 3000 mm, bevorzugt etwa 2000 mm, betragen.

Die Erfindung ist nachfolgend anhand von in den Zeichnungen dargestellten Ausführungsbeispielen näher erläutert. Es zeigen:
- Figur 1: im Schema eine Ablaufsituation bei der Herstellung eines Strukturbauteils;
- Figur 2: im Querschnitt eine U-förmig umgeformte Platine;
- Figur 3: im Querschnitt eine zu einem Rohrkörper umgeformte Platine;
- Figur 4: im Querschnitt ein durch Innenhochdruckumformung gebildetes Strukturbauteil;
- Figur 5: eine Seitenansicht auf das Strukturbauteil der Figur 4 und
- Figur 6: eine perspektivische Darstellung des Strukturbauteils der Figuren 4 und 5.

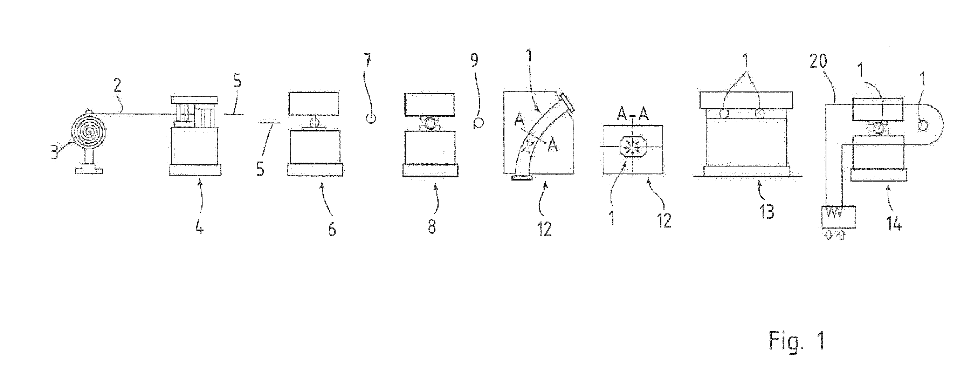

Anhand der Figuren 1 bis 6 ist nachfolgend die Herstellung eines Strukturbauteils 1 für eine Kraftfahrzeugkarosserie in Form einer A-Säule sowie die Geometrie dieses Strukturbauteils 1 beschrieben.

Zunächst wird gemäß Figur 1 ein Metallband 2 von einem Coil 3 abgezogen und einer Stanzvorrichtung 4 zugeleitet. In dieser werden von dem Metallband 2 für die Weiterbearbeitung korrekt zugeschnittene Platinen 5 abgeteilt.

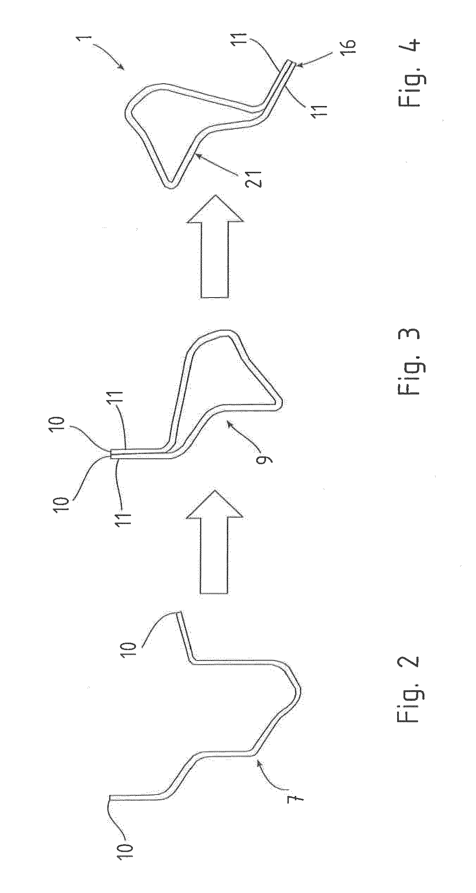

Im Anschluss daran wird jede Platine 5 in einem ersten Umformschritt in einer entsprechend ausgebildeten Presse 6 U-förmig vorgeformt. Aus der Figur 2 ist der genaue Querschnitt der U-Form der vorgeformten Platine 7 mit längsseitigen freien Kontaktbereichen 10 zu erkennen

Diese vorgeformte Platine 7 wird dann in einer nachgeschalteten weiteren Presse 8 zu einem Rohrkörper 9 umgeformt (siehe auch Figur 3). Dieser Rohrkörper 9 hat weitgehend die Konturen einer A-Säule, wobei die längsseitigen freien Kontaktbereiche 10 des Rohrkörpers 9 an Flanschen 11 ausgebildet sind, die aneinander liegen.

Der Rohrkörper 9 gemäß Figur 3 wird anschließend in einem Innenhochdruckwerkzeug 12 zum Strukturbauteil 1 (A-Säule) endgeformt und hierbei kalibriert. Die Flansche 11 werden hierbei dicht aneinander gepresst (Figuren 4 bis 6).

In einer nachgelagerten stationären Heizeinrichtung 13 wird das Strukturbauteil 1 erwärmt. Dies kann induktiv, resistiv, kapazitiv, konduktiv oder per Infrarotstrahlung erfolgen.

Im Anschluss daran wird das erwärmte Strukturbauteil 1 in einem Haltewerkzeug 14 durch Besprühen, Anblasen oder Tauchen gekühlt und hierbei vergütet oder gehärtet. Der entsprechende Kühlmittelkreislauf ist mit dem Bezugszeichen 20 angedeutet.

Entsprechend der vorgeschilderten Verfahrensweise anhand der Herstellung eines Strukturbauteils 1 in Form einer A-Säule können auch weitere Bauteile einer Kraftfahrzeugkarosserie, wie B-Säulen, Längsträger, Schweller, Dachrahmen, Querträger oder Stirnwände hergestellt werden.

In Abwandlung des anhand der Figuren 1 bis 6 geschilderten Verfahrens wird erfindungsgemäß eine zugeschnittene Platine 5 vor ihrer Umformung auch erwärmt und isotherm beheizt U-förmig vorgeformt und danach ebenfalls isotherm beheizt rohrförmig umgeformt, ehe sie dann in einem Innenhochdruckwerkzeug 12 zum Strukturbauteil 1 endgeformt wird. Die Erwärmung kann hierbei auf eine Temperatur oberhalb des AC3-Punkts im Eisen-Kohlenstoff-Diagramm erfolgen. Dies gilt sowohl für ein Härten des Strukturbauteils 1 als auch für eine abschließende Vergütung.

Des Weiteren ist es in Abwandlung des anhand der Figuren 1 bis 6 geschilderten Verfahrens erfindungsgemäß vorgesehen, den unter Erwärmung umgeformten Rohrkörper 9 in einem Innenhochdruckwerkzeug 12 zugleich endzuformen und abzuschrecken.

Schließlich ist es noch denkbar, eine zugeschnittene Platine 5 vor dem Umformen zum Rohrkörper 9 zu erwärmen. Dies erfolgt bevorzugt auf eine Temperatur unterhalb des AC3-Punkts. Nach dem U-förmigen Vorformen wird die Platine 7 abgeschreckt. Danach wird die U-förmig vorgeformte Platine 7 nochmals zumindest lokal auf größer (>) AC3 erwärmt und anschließend zum Rohrkörper 9 umgeformt.

Der Rohrkörper 9 wird dann in einem Innenhochdruckwerkzeug 12 endgeformt und danach gegebenenfalls gelocht und/oder hinsichtlich der freien Kontaktbereiche 10 gefügt. Das Fügen kann durch MIG-, MAG-, WIG- oder Laserverfahren, durch Löten oder durch einen Bauteilverbund sowie durch Nieten, Schrauben, Clinchen usw. erfolgen. Schließlich wird das Strukturbauteil 1 in einem gekühlten Haltewerkzeug 14 abgeschreckt.

Als Material für das Strukturbauteil 1 kann AISi, vorbeschichtetes 22MnB5 oder BTR165 verwendet werden.

Die Innenhochdruckumformung kann insbesondere mit Gas, zum Beispiel N2, erfolgen oder aber auch mit einer geeigneten Flüssigkeit.

Die Wandstärke des Strukturbauteils 1 kann bis auf gleich oder kleiner 4 mm beschränkt werden, wobei Biegeradien bis 2 mm möglich sind.

Die Abschreckzeiten betragen 3 bis 45 Sekunden. Die Transferzeiten zwischen den einzelnen Werkzeugen betragen 1 bis 20 Sekunden. Die Formzeit beim U-förmigen Vorformen beträgt 1 bis 20 Sekunden, während die Umformzeit zum Rohrkörper 9 ebenfalls 1 bis 20 Sekunden beträgt.

Die Zeit beim Innenhochdruckumformen kann zwischen 0,1 bis 5 Sekunden liegen. Damit ist sichergestellt, dass kaum Fluidmittel verloren geht.

Die Flansche 11 des Strukturbauteils 1 können auch linienförmig, zum Beispiel über die längsseitigen Kontaktbereiche 10, gefügt sein. Sie können eventuell mit Sicken zur Steifigkeitserhöhung versehen sein.

Das Strukturbauteil 1 in Form einer A-Säule für einen Personenkraftwagen (Figuren 4 bis 6) umfasst einen in Längsrichtung gekrümmten Rohrkörper 9, der auf der Innenseite 15 der Krümmung mit einem quer abstehenden Steg 16 aus aneinander liegenden Flanschen 11 versehen ist, wobei ein Endabschnitt 17 des Rohrkörpers 9 stärker als der restliche Längenbereich 18 gekrümmt ist. Beide Endabschnitte 17, 19 des Rohrkörpers 9 sind mit einem zumindest annähernd runden Querschnitt versehen. Der Längenbereich 18 zwischen den Endabschnitten 17, 19 weist einen mehrfach konvex und konkav gekrümmten Querschnitt 21 auf. Dieser Querschnitt 21 ist mit der notwendigen Deutlichkeit aus der Figur 4 ersichtlich.

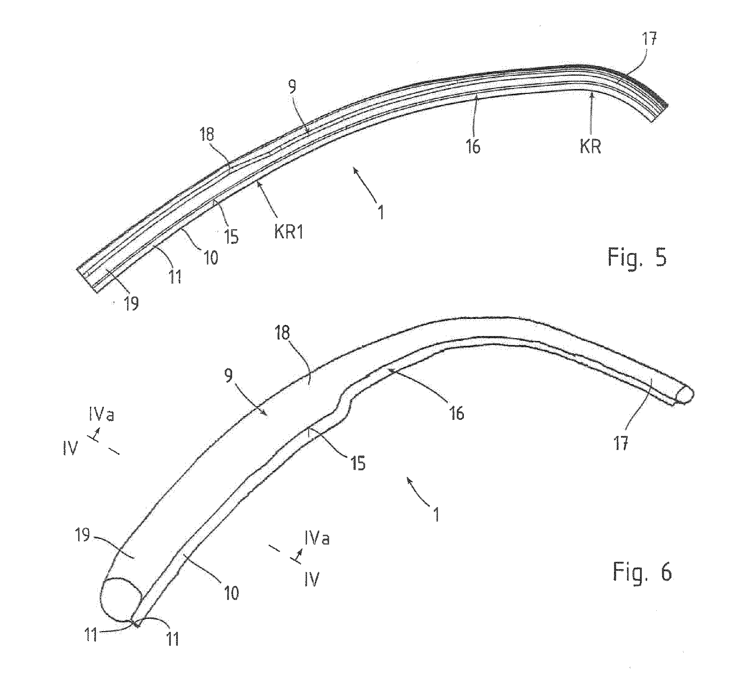

Insbesondere aus der Figur 6 ist zu erkennen, dass der in Längsrichtung stärker gekrümmte Endabschnitt 17 des Rohrkörpers 9 mit einem kleineren Querschnitt als der andere Endabschnitt 19 versehen ist.

Ferner zeigt die Figur 5, dass der stärker gekrümmte Endabschnitt 17 einen Krümmungsradius KR zwischen 200 mm und 400 mm, bevorzugt 300 mm, aufweist.

Der Krümmungsradius KR1 des sich an den Endabschnitt 17 mit dem stärkeren Krümmungsradius KR anschließenden Längenbereichs 18 beträgt zwischen 1500 mm und 3000 mm, bevorzugt etwa 2000 mm.

### Bezugszeichen:

- 1 -: Strukturbauteil
- 2 -: Metallband
- 3 -: Coil
- 4 -: Stanzvorrichtung
- 5 -: Platine
- 6 -: Presse
- 7 -: U-förmige Platine
- 8 -: Presse
- 9 -: Rohrkörper
- 10 -: Kontaktbereiche
- 11 -: Flansche
- 12 -: Innenhochdruckwerkzeug
- 13 -: Heizeinrichtung
- 14 -: Haltewerkzeug
- 15 -: Innenseite v. 9
- 16 -: Steg
- 17 -: Endabschnitt v. 9
- 18 -: Längenbereich v. 9
- 19 -: Endabschnitt v. 9
- 20 -: Kühlmittelkreislauf
- 21 -: Querschnitt v. 18

## Patentansprüche

1. Verfahren zur Herstellung eines rohrförmigen Strukturbauteils (1) für ein Kraftfahrzeug, bei welchem zunächst eine metallische Platine (5) umfangsseitig beschnitten und dann in mindestens einem Umformschritt zu einem Rohrkörper (9) mit einander gegenüber liegenden randseitigen Kontaktbereichen (10) verformt wird und mittels Innenhochdruckumformung zu dem rohrförmigen Strukturbauteil (1) umgeformt wird, wobei die Kontaktbereiche (10) während der Innenhochdruckumformung dicht zusammengedrückt werden, **dadurch gekennzeichnet, dass** der Rohrkörper (9) auf über Ac3 vor dem Innenhochdruckumformen erwärmt und mittels Innenhochdruck zum Strukturbauteil (1) endgeformt wird und dann in dem Formwerkzeug während des Innenhochdruckformens abgekühlt und gehärtet wird.

2. Verfahren nach Anspruch 1, **dadurch gekennzeichnet, dass** die umfangsseitig beschnittene Platine (5) in einem ersten Umformschritt U-förmig vorgeformt und in einem zweiten Umformschritt zu einem Rohrkörper (9) umgeformt wird.

3. Verfahren nach einem der Ansprüche 1 oder 2, **dadurch gekennzeichnet, dass** das Strukturbauteil (1) während oder nach der Innenhochdruckumformung gelocht und/oder bezüglich seiner längsgerichteten randseitigen Kontaktbereiche (10) gefügt wird.

4. Verfahren nach einem der Ansprüche 1 bis 3, **dadurch gekennzeichnet, dass** die Kontaktbereiche (10) des Rohrkörpers (9) bei der Innenhochdruckumformung linienförmig aneinander gepresst werden.

5. Verfahren nach einem der Ansprüche 1 bis 4, **dadurch gekennzeichnet, dass** die Kontaktbereiche (10) des Rohrkörpers (9) an flächig aneinander liegenden Flanschabschnitten (11) ausgebildet werden.

6. Verfahren nach einem der Ansprüche 1 bis 5, **dadurch gekennzeichnet, dass** die Endabschnitte (17, 19) des Strukturbauteils (1) mit einem zumindest annähernd runden Querschnitt versehen werden.

7. Verfahren nach einem der Ansprüche 1 bis 6, **dadurch gekennzeichnet, dass** wenigstens die Endabschnitte (17, 19) des Rohrkörpers (9) über jeweils zumindest einen Dorn verformt werden.

8. Verfahren nach einem der Ansprüche 1 bis 7 zur Herstellung eines Strukturbauteils (1) in Form einer A-Säule für einen Personenkraftwagen, **dadurch gekennzeichnet, dass** die umfangsseitig beschnittene Platine (5) zunächst einen U-förmigen Querschnitt mit konvex und konkav gekrümmten Umfangsbereichen (21) sowie längsseitigen Flanschen (11) erhält, dass anschließend der U-förmige Querschnitt unter flächigen Kontakt der Flansche (11) zu einem in Längsrichtung gekrümmten Rohrkörper (9) mit einem auf der Innenseite (15) der Krümmung liegenden seitlichen Steg (16) umgeformt wird.

9. Verfahren nach Anspruch 8, **dadurch gekennzeichnet, dass** der Endabschnitt (17) mit dem kleineren Querschnitt einen in Längsrichtung des Rohrkörpers (9) kleineren Krümmungsradius (KR) als der restliche Längenbereich (18) der Rohrkörpers (9) erhält.

## Claims

1. Method for producing a tubular structural component (1) for a motor vehicle, wherein first of all a metal plate (5) is trimmed about its circumference and then, in at least one forming step, is deformed into a tubular body (9) with edge-positioned contact regions (10) located opposite one another and is formed by internal high-pressure forming to produce the tubular structural component (1), the contact regions (10) being pressed tightly together during the internal high-pressure forming, **characterised in that** the tubular body (9) is heated to above Ac3 before the internal high-pressure forming and is end-formed by internal high pressure to produce the structural component (1) and then cooled and hardened in the moulding tool during the internal high-pressure forming.

2. Method according to claim 1, **characterised in that** in a first forming step the circumferentially trimmed plate (5) is pre-formed into a U shape and in a second forming step it is formed into a tubular body (9).

3. Method according to one of claims 1 or 2, **characterised in that**, during or after the internal high-pressure forming, the structural component (1) is perforated and/or joined along its longitudinally directed, edge-positioned contact regions (10).

4. Method according to one of claims 1 to 3, **characterised in that** the contact regions (10) of the tubular body (9) are linearly pressed against one another during the internal high pressure forming.

5. Method according to one of claims 1 to 4, **characterised in that** the contact regions (10) of the tubular body (9) are configured on flange portions (11) lying flat against one another.

6. Method according to one of claims 1 to 5, **characterised in that** the end portions (17, 19) of the structural component (1) are provided with an at least approximately round cross-section.

7. Method according to one of claims 1 to 6, **characterised in that** at least the end portions (17, 19) of the tubular body (9) are each shaped by at least one mandrel.

8. Method according to one of claims 1 to 7 for the production of a structural component (1) in the form of an A-pillar for a passenger vehicle, **characterised in that** the circumferentially trimmed plate (5) is initially given a U-shaped cross-section having convexly and concavely curved peripheral regions (21), as well as longitudinal flanges (11), and **in that** the U-shaped cross-section, with the flanges (11) in planar contact,is then formed into a tubular body (9) curved in the longitudinal direction, with a lateral web (16) located on the inside (15) of the curvature.

9. Method according to claim 8, **characterised in that** the end portion (17) with the smaller cross-section is given a smaller radius of curvature (KR) in the longitudinal direction of the tubular body(9) than the remainder of the longitudinal region (18) of the tubular body (9).

## Revendications

1. Procédé de fabrication d'un élément structurel tubulaire (1) pour un véhicule automobile, selon lequel on découpe d'abord une plaque métallique (5) au niveau de sa périphérie, selon lequel on la déforme ensuite, lors d'au moins une étape de formage, pour obtenir un corps tubulaire (9) avec des zones de contact (10) marginales qui se font face et selon lequel on la transforme enfin au moyen d'un hydroformage pour obtenir l'élément structurel tubulaire (1), les zones de contact (10) étant pressées l'une contre l'autre de manière à assurer l'étanchéité pendant l'hydroformage, **caractérisé en ce qu'**on chauffe le corps tubulaire (9) à une température supérieure à Ac3 avant l'hydroformage, on lui donne sa forme finale d'élément structurel (1) au moyen de l'hydroformage puis on le refroidit et durcit dans l'outil de formage pendant l'hydroformage.

2. Procédé selon la revendication 1, **caractérisé en ce qu'**on forme préalablement la plaque découpée (5) dans une première étape de formage pour lui donner une forme en U et on la forme ensuite dans une deuxième étape de formage pour obtenir un corps tubulaire (9).

3. Procédé selon l'une des revendications 1 ou 2, **caractérisé en ce qu'**on perce l'élément structurel (1) pendant ou après l'hydroformage et/ou on joint ses zones de contact (10) marginales longitudinales.

4. Procédé selon l'une des revendications 1 à 3, **caractérisé en ce que** les zones de contact (10) du corps tubulaire (9) sont pressées l'une contre l'autre en une ligne lors de l'hydroformage.

5. Procédé selon l'une des revendications 1 à 4, **caractérisé en ce que** les zones de contact (10) du corps tubulaire (9) sont conçues sur des parties de plaque (11) se trouvant surface contre surface.

6. Procédé selon l'une des revendications 1 à 5, **caractérisé en ce que** les parties terminales (17, 19) de l'élément structurel (1) ont une section transversale au moins approximativement ronde.

7. Procédé selon l'une des revendications 1 à 6, **caractérisé en ce qu'**au moins les parties terminales (17, 19) du corps tubulaire (9) sont déformées par l'intermédiaire d'au moins un mandrin à chaque fois.

8. Procédé selon l'une des revendications 1 à 7 pour la fabrication d'un élément structurel (1) sous la forme d'un montant avant pour une automobile, **caractérisé en ce que** la plaque découpée (5) reçoit d'abord une section transversale en forme de U avec des zones périphériques (21) courbées de manière convexe ou concave et avec des plaques (11) longitudinales puis **en ce que** la section transversale en forme de U est transformée par contact de surfaces de la plaque (11) en un corps tubulaire (9) courbé dans le sens de la longueur avec une traverse latérale (16) située du côté intérieur (15) de la courbure.

9. Procédé selon la revendication 8, **caractérisé en ce que** la partie terminale (17) ayant une section transversale plus petite reçoit un rayon de courbure (KR) plus petit, dans le sens de la longueur du corps tubulaire (9), que la zone longitudinale restante (18) du corps tubulaire (9).
